# EUROPEAN PATENT APPLICATION

(11) **EP 4 494 982 A1**
(43) Date of publication of application: **22.01.2025**
(21) Application number: 24189172.0
(22) Date of filing: 17.07.2024
(51) Int. Cl.: B62D 35/00

(54) **A HEAVY GOODS VEHICLE**

(30) Priority: 18.07.2023 NL 2035409
(71) Applicant: DAF Trucks N.V., 5643 TW Eindhoven (NL)
(72) Inventor: DINGEMANS, Cornelis Petrus Adrianus, 5643 TW Eindhoven (NL)
(74) Representative: V.O.

(57) **Abstract**

A heavy goods vehicle comprises a driver cabin including a cabin roof, a cabin rear wall, an air deflector and a cooling radiator arranged behind the cabin rear wall. The air deflector has a leading and a trailing edge. The air deflector comprises a pivotal air deflector hood pivotably attached with a leading edge thereof to the cabin roof and a height adjustment unit for adjusting the height of a trailing edge thereof. The air deflector hood comprises a U-shaped and a central section. The U-shaped section comprises a base portion having a read edge and two side portions, each side portion rearwardly extending from a lateral side of the base portion. The central section is arranged between the side portions. The central section of the air deflector hood is pivotably attached to a second horizontal axis positioned at or near the base portion. The height adjustment unit is configured for pivotally moving the central section with regard to the U-shaped section around the second horizontal axis from an aligned position in which top surfaces of the U-shaped and the central section are flush to a deviating position in which the top surface of the central section is positioned closer to the cabin roof than the top surface of the U-shaped section. In the aligned position rear edges of the side portions and a rear edge of the central section form the trailing edge of the air deflector.

## Description

The invention relates to a heavy goods vehicle comprising a driver cabin including a cabin roof, a cabin rear wall and a air deflector for reducing aerodynamic drag disposed at the cabin roof, and at least one cooling radiator, the air deflector comprising a leading edge and a trailing edge.

Such a heavy goods vehicle is for example known from DE3916692A1. In this known heavy goods vehicle as the air deflector for reducing aerodynamic drag is fastened on the roof of the driver's cabin. The air deflector comprises an aerodynamically shaped air deflector hood and a support structure serving to stiffen and fasten it to the driver's cab roof. The air deflector hood generally comprises an inclined front panel with laterally adjoining side surfaces that hang down toward the driver's cabin roof. The air deflector hood of the air deflector is formed in its front section by a flap connected to an electric, a hydraulic or a pneumatic servomotor. This flap has a streamlined outer contour and complements the rest of the air deflector hood in a streamlined manner. The flap can be pivoted about an axis or a hinge and is normally held in a closed position by the servomotor. The flap can automatically be brought into an open position releasing an air access to a cooler unit positioned above the cabin roof if the need therefore is determined by a vehicle-internal control device. Such a need can exist, for example, if the coolant temperature is too high, which is detected by the control device and then converted into a corresponding opening command for the servomotor. However, the recent development of electric heavy goods vehicles or heavy goods vehicles powered by e.g. fuel cells has created the need for additional cooling radiators and consequently also a desire to provide additional air flow to such additional cooling radiators.

It is an object of the present invention to provide a heavy goods vehicle in which air can be directed to cooling radiators in an alternative and/or more efficient manner.

According to the invention this object is obtained by providing a heavy goods vehicle comprising a driver cabin including a cabin roof, a cabin rear wall and an air deflector for reducing aerodynamic drag disposed at the cabin roof, and at least one cooling radiator, the air deflector comprising a leading edge and a trailing edge, characterized in that the at least one cooling radiator is arranged behind the cabin rear wall, in that the air deflector comprises a pivotal air deflector hood pivotably attached with a leading edge thereof to the cabin roof about a first forward horizontal axis arranged at a forward side of the cabin roof and a height adjustment unit for adjusting the height of a trailing edge of the air deflector hood, the air deflector hood comprises a U-shaped section and a central section, the U-shaped section comprising a base portion and two side portions, each side portion rearwardly extending from a lateral side of the base portion, the central section being arranged between the side portions, a front edge of the base portion forming the leading edge of the air deflector hood, the base portion having a rear edge, the central section of the air deflector hood being pivotably attached to a second horizontal axis positioned at or near the base portion, the height adjustment unit being configured for pivotally moving the central section of the air deflector hood with regard to the U-shaped section of the air deflector hood around the second horizontal axis from an aligned position in which top surfaces of the U-shaped section and the central section of the air deflector hood are flush to a deviating position in which the top surface of the central section is positioned closer to the cabin roof than the top surface of the U-shaped section, wherein in the aligned position rear edges of the side portions and a rear edge of the central section form the trailing edge of the air deflector. The invention is based on the insight that in the heavy goods vehicle known from DE3916692A1 the air deflector hood of the air deflector is formed in its front section by a flap and that rearwardly of the movable flap the air deflector comprises a rear section that is fixedly (i.e. immovably) attached to the cabin roof and onto which rear section the cooling unit is attached. Not only does the cooling unit itself provide an obstruction to air flowing through the opening formed when the flap is in the open position and thus prevents some of the air reaching the space behind the cabin rear wall but also the fixedly arranged rear section of the air deflector will guide a part of the incoming air in a direction upwardly, preferably to above a superstructure, such as a cargo box or a semi-trailer, behind the driver's cabin. By according to the invention using an air deflector hood of which the U-shaped section's rear edge forms a part of the trailing edge of the air deflector (i.e. the U-shaped section is the last rear section of the air deflector) ensures that in the deviating position of the U-shaped section air can at least substantially freely access the area behind the cabin rear wall, thereby being able to more efficiently reach and cool the at least one cooling radiator arranged behind the cabin rear wall. It is remarked that throughout this application the expressions "front" and "rear" are defined with regard to the normal driving direction of the heavy goods vehicle. The expressions "inner" and "outer" and similar terms are defined with regard to a longitudinal axis of the heavy goods vehicle.

In an embodiment of a heavy goods vehicle according to the invention in the deviating position the top surface of the central section of the air deflector hood is at least substantially parallel to the cabin roof. In this manner air can even more efficiently reach and cool the at least one cooling radiator arranged behind the cabin rear wall.

In another embodiment of a heavy goods vehicle according to the invention the second horizontal axis is attached to an undersurface of the base portion of the U-shaped section. In this manner a compact and relative easy construction of the air deflector hood can be obtained.

In a further embodiment of a heavy goods vehicle according to the invention each of the side portions is provided with a downwardly extending outer arm at an outer side edge thereof. Preferably, each of the side portions is provided with a downwardly extending inner arm at an inner side edge thereof. In this manner a channel is formed between either the downwardly extending outer arms or the downwardly extending inner arms (the channel being formed between the most inwardly situated downwardly extending arm) as a result of which air is guided to an area behind the cabin rear wall in a more guided manner while in addition the side portions are provided with more stiffness.

In another embodiment of a heavy goods vehicle according to the invention the air deflector comprises a front cap fixedly attached to the forward side of the cabin roof, the front cap being arranged around at least the front edge of the base portion of the U-shaped section, the leading edge of the front cap forming the leading edge of the air deflector. Such a front cap for example forms an additional protection for the height adjustment unit during driving against objects or particles.

In a still further embodiment of a heavy goods vehicle according to the invention the air deflector comprises side guides, each side guide being fixedly attached to and longitudinally extending along each side of the cabin roof. Preferably, the downwardly extending outer arm of a side portion is arranged outwardly of the respective side guide. These side guides form a channel such that air is guided to the area behind the cabin rear wall even if the air deflector hood is positioned in a most upward position.

In a yet further embodiment of a heavy goods vehicle according to the invention the heavy goods vehicle comprises a control unit for controlling the height adjustment unit, the control unit being configured for pivotally moving the central section of the air deflector hood to the deviating position only when a driving speed of the heavy goods vehicle is below a speed limit, the speed limit preferably being 14 m/s. During driving of the heavy goods vehicle with a superstructure the air resistance of air hitting the superstructure is increased when the air deflector hood is in the deviating position, leading to an increased fuel consumption. However, in case additional air flow to the at least one cooling radiator is necessary to prevent damage to for example fuel cells, electric or electronic equipment then prevention of such a dame outweighs the negative influence of an air deflector hood in its deviating position. However, it has appeared that in most cases air cooling of the cooling radiator is sufficient when the heavy goods vehicle is driving at a speed above a certain speed limit, in most cases 14 m/s, so that the control unit does not need to move U-shaped section in the deviating position, but can keep the U-shaped section in the aligned position or forcedly move the U-shaped section in the aligned position when the driving speed exceeds the speed limit, thereby reducing air drag and improving fuel efficiency.

The invention will be further explained with reference to the Figures, in which a non-limiting exemplary embodiment of according to the invention is shown:
Fig. 1 very schematically shows an embodiment of a heavy goods vehicle according to the invention with the air deflector in a position pivoted downwards;
Fig. 2 very schematically shows the heavy goods vehicle as shown in Figure 1 with the air deflector in a position pivoted upwards;
Fig. 3 schematically shows part of the air deflector and height adjustment unit of an embodiment of a heavy goods vehicle according to the invention (the air deflector being removed to show the height adjustment unit0;
Fig. 4 schematically shows part of the air deflector and cooling radiator arranged behind the cabin rear wall of an embodiment of a heavy goods vehicle according to the invention (the air deflector being removed to show the cooling radiator);
Fig. 5 schematically shows an embodiment of a heavy goods vehicle according to the invention in which the air deflector hood is positioned in an aligned position in which top surfaces of the U-shaped section and the central section of the air deflector hood are flush;
Fig. 6 schematically shows the embodiment of the heavy goods vehicle shown in Figure 5 in which the air deflector hood is positioned in a deviating position in which the top surface of the central section is positioned closer to the cabin roof than the top surface of the U-shaped section;
Fig. 7 schematically shows the embodiment of Figure 6 from another side with the central section removed; and
Fig. 8 schematically shows the embodiment of Figure 7 as seen from the cooling radiator.

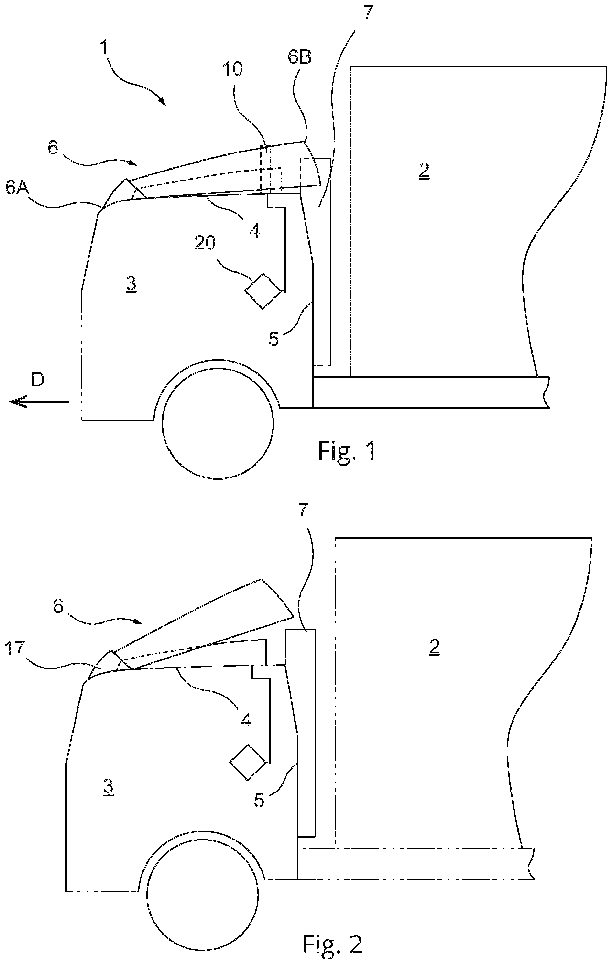

In Fig. 1 an embodiment of a heavy goods vehicle 1 according to the invention is shown very schematically in perspective. The heavy goods vehicle can be a tractor - semitrailer combination coupled by a fifth wheel or - as shown - a so called rigid heavy goods vehicle with a cargo box 2. The heavy goods vehicle 1 comprises a driver cabin 3 with a cabin roof 4, a cabin rear wall 5 and an air deflector 6. The air deflector 6 is disposed on the cabin roof 4 and comprises a leading edge 6A and a trailing edge 6B. The air deflector 6 can be pivoted downwards (as shown in Fig. 1) and upwards (as shown in Fig. 2) to a height depending on the height of the cargo box 4 for reducing aerodynamic drag as is known in the art. It is remarked that throughout the expressions "front" and "rear" are defined with regard to the normal driving direction D of the heavy goods vehicle 1. The expressions "inner" and "outer" and similar terms are defined with regard to a longitudinal axis of the heavy goods vehicle 1.

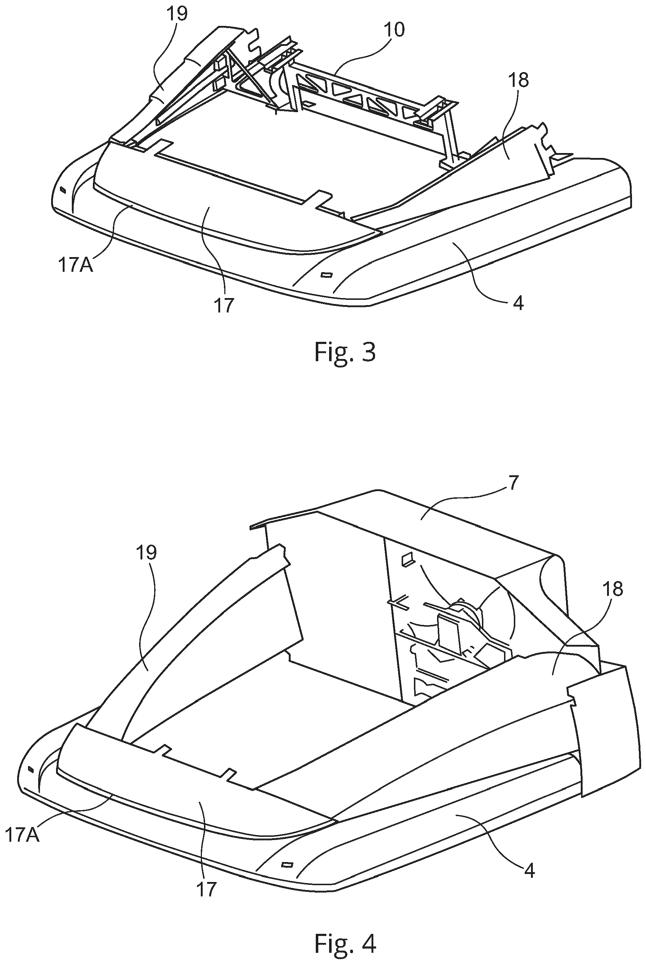

At least one cooling radiator 7 is arranged behind the cabin rear wall 5 for cooling vehicle equipment, such as for example fuel cells, brakes, electric or electronic equipment. The cooling radiator 7 can extend to above the cabin roof 4 as shown in Figure 4.

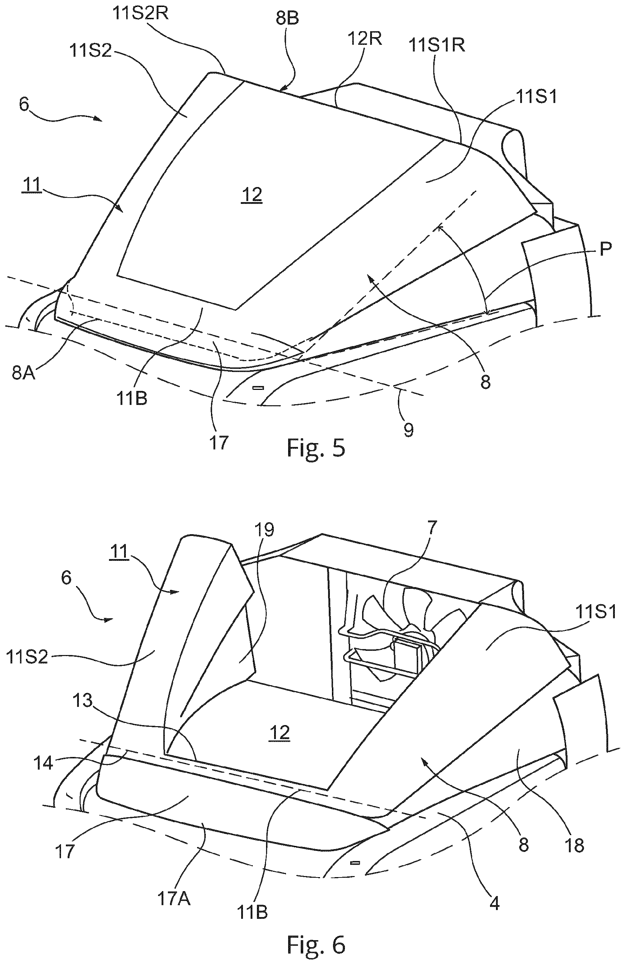

A shown in the embodiment of Figures 5 and 6 the air deflector 6 comprises a pivotal air deflector hood 8 pivotably attached ( as indicated by the double arrow P) with a leading edge 8A thereof to the cabin roof 4 about a first forward horizontal axis 9 arranged at a forward side of the cabin roof 4. The heavy goods vehicle 1 is provided with a height adjustment unit 10 (part of which is shown in Figure 3) for adjusting the height of a trailing edge 8B of the air deflector hood 8.

According to the invention the air deflector hood 8 comprises a U-shaped section 11 and a central section 12. The U-shaped section 11 comprises a base portion 11B and two side portions 11S1, 11S2, each side portion 11S1, 11S2 rearwardly extending from a lateral side of the base portion 11B. The central section 12 is arranged between the side portions 1 1S 1, 11S2. The front edge of the base portion 11B forms the leading or front edge of the air deflector hood 11. The read edge of the base portion 11B is indicated by the reference numeral 13. The central section 12 of the air deflector hood 11 is pivotably attached to a second horizontal axis 13 positioned at or near the base portion 11B as indicated in Figure 6.

The height adjustment unit 10 is configured for pivotally moving the central section 12 of the air deflector hood 11 with regard to the U-shaped section 11 around the second horizontal axis 13 from an aligned position (shown in Figure 5) in which top surfaces of the U-shaped section 11 and the central section 12 are flush to a deviating position (shown in Figure 6) in which the top surface of the central section 12 is positioned closer to the cabin roof 4 than the top surface of the U-shaped section 11. In the shown embodiment the second horizontal axis 13 is attached to an undersurface of the base portion 11B of the U-shaped section 11. In the aligned position rear edges 11S1R, 11S2R of the side portions 11S1, 11S2 and a rear edge 12R of the central section 12 form the trailing edge 8B of the air deflector 6, meaning that the air deflector 6 has no sections anymore behind the U-shaped section 11 and the central section 12. In the deviating position as shown in Figure 6 the top surface of the central section 12 of the air deflector hood 11 is at least substantially parallel to the cabin roof 4, such that air can efficiently reach and cool the at least one cooling radiator 7 arranged behind the cabin rear wall. In other not shown embodiments the top surface of the central section 12 of the air deflector hood 11 can be positioned under an angle to the cabin roof 4.

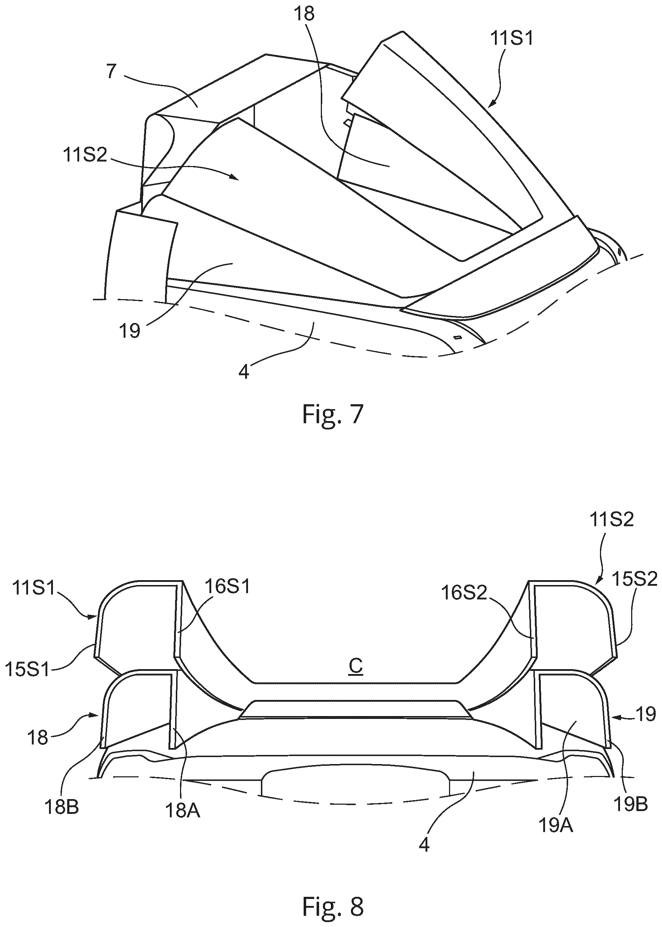

In the embodiments of a heavy goods vehicle 1 shown in the Figures each of the side portions 11S1, 11S2 is provided with a downwardly extending outer arm 15S1, 15S2 at an outer side edge thereof, as well as with a downwardly extending inner arm 16S1, 16S2 at an inner side edge thereof as can be best seen in Figure 8. In this manner a channel C is formed between the downwardly extending inner arms 16S1, 16S2 as a result of which air is guided to an area behind the cabin rear wall 5 in a more guided manner while in addition the side portions 11S1, 11S2 are provided with more stiffness. Please note that in other not shown embodiments e.g. the side portions are only provided with downwardly extending outer arms, the channel C then being formed between the downwardly extending outer arms.

In the shown embodiments of the heavy goods vehicle 1 the air deflector 6 comprises a front cap 17 fixedly attached to the forward side of the cabin roof 4 and arranged around at least the front edge of the base portion 11B of the U-shaped section 11. The leading edge 17A of the front cap 17 forms the leading edge 6A of the air deflector 6, meaning that the front cap 17 is the most forward section of the air deflector 6. Side guides 18, 19 (in the shown embodiments provided with both downwardly extending inner and outer arms 18A, 18B; 19A, 19B) are fixedly attached to and longitudinally extending along each side of the cabin roof 4, as e.g. shown in Figures 7 and 8. As is more clearly visible in Figure 8 the downwardly extending outer arms 15S1, 15S2 of a side portion 11S1, 11S2 are arranged outwardly of the respective side guide 18, 19. These side guides 18, 19 (in the embodiment shown in Figure 8 the downwardly extending inner arms 18A, 19A thereof) form a channel such that air is guided to the area behind the cabin rear wall 5 even if the air deflector hood 8 is positioned in a most upward position.

As indicated in Figure 1 the heavy goods vehicle 1 comprises a control unit 20 for controlling the height adjustment unit 10. The control unit 20 is amongst other things configured for pivotally moving the air deflector 6 to reduce draft during driving of the heavy goods vehicle 1. According to the invention the control unit 20 is in particular configured to move the central section 12 of the air deflector hood 11 (the latter being a part of the air deflector 6) relative to the U-shaped section 11 from the aligned position (for reducing aerodynamic drag, as shown in Fig. 5) to the deviating position (shown in Fig. 6, for allowing air to access the cooling radiator) and vice versa. According to the invention the control unit 20 is arranged to only move the central section 12 in the deviating position when a driving speed of the heavy goods vehicle 1 is below a speed limit, in particular the speed limit is 14 m/s (about 50 km/h). In other embodiments, the control unit 20 can also be provided with a manual override so that the driver of the heavy goods vehicle can move the air deflector hood and/or the central section thereof at his own initiative.

## Claims

1. A heavy goods vehicle comprising a driver cabin including a cabin roof, a cabin rear wall and an air deflector for reducing aerodynamic drag disposed at the cabin roof, and at least one cooling radiator, the air deflector comprising a leading edge and a trailing edge, **characterized in that** the at least one cooling radiator is arranged behind the cabin rear wall, **in that** the air deflector comprises a pivotal air deflector hood pivotably attached with a leading edge thereof to the cabin roof about a first forward horizontal axis arranged at a forward side of the cabin roof and a height adjustment unit for adjusting the height of a trailing edge of the air deflector hood, the air deflector hood comprises a U-shaped section and a central section, the U-shaped section comprising a base portion and two side portions, each side portion rearwardly extending from a lateral side of the base portion, the central section being arranged between the side portions, a front edge of the base portion forming the leading edge of the air deflector hood, the base portion having a rear edge, the central section of the air deflector hood being pivotably attached to a second horizontal axis positioned at or near the base portion, the height adjustment unit being configured for pivotally moving the central section of the air deflector hood with regard to the U-shaped section of the air deflector hood around the second horizontal axis from an aligned position in which top surfaces of the U-shaped section and the central section of the air deflector hood are flush to a deviating position in which the top surface of the central section is positioned closer to the cabin roof than the top surface of the U-shaped section, wherein in the aligned position rear edges of the side portions and a rear edge of the central section form the trailing edge of the air deflector.

2. A heavy goods vehicle according to claim 1, wherein in the deviating position the top surface of the central section of the air deflector hood is at least substantially parallel to the cabin roof.

3. A heavy goods vehicle according to claim 1 or 2, wherein the second horizontal axis is attached to an undersurface of the base portion of the U-shaped section.

4. A heavy goods vehicle according to any one of the preceding claims, wherein each of the side portions is provided with a downwardly extending outer arm at an outer side edge thereof.

5. A heavy goods vehicle according to any one of the preceding claims, wherein each of the side portions is provided with a downwardly extending inner arm at an inner side edge thereof

6. A heavy goods vehicle according to any one of the preceding claims, wherein the air deflector comprises a front cap fixedly attached to the forward side of the cabin roof, the front cap being arranged around at least the front edge of the base portion of the U-shaped section, the leading edge of the front cap forming the leading edge of the air deflector.

7. A heavy goods vehicle according to any one of the preceding claims, wherein the air deflector comprises side guides, each side guide being fixedly attached to and longitudinally extending along each side of the cabin roof.

8. A heavy goods vehicle according to claims 4 and 7, wherein the outer arm of a side portion is arranged outwardly of the respective side guide.

9. A heavy goods vehicle according to any one of the preceding claims, wherein the heavy goods vehicle comprises a control unit for controlling the height adjustment unit, the control unit being configured for pivotally moving the central section of the air deflector hood to the deviating position only when a driving speed of the heavy goods vehicle is below a speed limit, the speed limit preferably being 14 m/s.
